# NEUE EUROPÄISCHE PATENTSCHRIFT

(11) **EP 1 722 887 B2**
(45) Veröffentlichungstag und Bekanntmachung des Hinweises auf die Entscheidung über den Einspruch: **15.03.2017**
(45) Hinweis auf die Patenterteilung: 25.08.2010
(21) Anmeldenummer: 05715830.5
(22) Anmeldetag: 08.03.2005
(51) Int. Cl.: B01J 20/12, C01B 33/38, C01B 33/40, C01B 33/42

(54) **VERFAHREN ZUR VERRINGERUNG DES DIOXINGEHALTES EINER BLEICHERDE**
METHOD FOR REDUCING THE DIOXIN CONTENT OF BLEACHING EARTH
PROCEDE POUR REDUIRE LA TENEUR EN DIOXINE D'UNE TERRE DECOLORANTE

(30) Priorität: 12.03.2004 DE 102004012259
(43) Veröffentlichungstag der Anmeldung: 22.11.2006
(73) Patentinhaber: Clariant International Ltd, 4132 Muttenz (CH)
(72) Erfinder: WERNER, Zschau, 82237 Steinebach (DE); SCHURZ, Klaus, 81477 München (DE)
(74) Vertreter: Rembold, Hansjörg
(86) Internationale Anmeldenummer: PCT/EP2005/002433
(87) Internationale Veröffentlichungsnummer: WO 2005/087366

(56) Entgegenhaltungen:
- EP-A1- 1 027 939
- WO-A-88/07891
- DE-A1- 4 128 106
- DE-A1- 4 330 274
- DE-A1- 4 330 274
- DE-A1- 19 536 992
- US-A- 4 700 638
- US-A- 5 619 936
- US-A1- 2001 017 081
- MCCARTER W.S.W. ET AL: 'Thermal Activation of Attapulgus Clay' INDUSTRIAL AND ENGINEERING CHEMISTRY Bd. 42, Nr. 3, Seiten 529 - 533
- HELLER-KALLAI L. ET AL: 'Mössbauer studies of palygorskite and some aspects of palygorskite mineralogy' CLAYS AND CLAY MINERALS Bd. 29, Nr. 3, 1981, Seiten 226 - 232
- OULTON T.D.: 'Commercial Production and Uses of Attapulgite Clay Products', Seiten 26 - 28
- BRADLEY W.F. ET AL: 'Clays and Clay Mineral', 1964, THE MACMILLAN COMPANY, NEW YORK Seiten 381 - 395
- VINEGAR H.J. ET AL: 'In Situ Thermal Desorption (ISTD) of PCBs' HAZWASTE/WORLD SUPERFUND IVIII Dezember 1997,
- EUROPEAN CLAY GROUP ASSOCIATION NEWSLETTER Nr. 5, Juli 2002, Seiten 57 - 78

## Beschreibung

Bleicherden finden seit vielen Jahrzehnten Anwendung bei der Reinigung von Ölen und Fetten. Bei der Herstellung der Bleicherde werden hauptsächlich zwei Verfahren angewendet, nämlich die Säureaktivierung von nicht-naturaktiven Smektiten, insbesondere von montmorillonithaltigen Rohtonen in einem Slurryprozess unter Verwendung von großen Mengen Säure sowie der Einsatz von naturaktiven Rohtonen, die gegebenenfalls noch mit geringen Mengen Säure in einem abwasserfreien Prozess aktiviert werden. Der Nachteil des ersten Verfahrens besteht darin, dass es mit großen sauren Abwassermengen gekoppelt ist. Hierbei werden jedoch sehr aktive Bleicherden erhalten. Die Bleichkraft der nach dem zweiten Verfahren hergestellten Produkte ist zumeist etwas geringer, jedoch erlaubt das einfache Herstellungsverfahren eine kostengünstige und umweltfreundliche Produktion.

Unabhängig von ihrer Herstellungsweise werden Bleicherden hauptsächlich dazu eingesetzt, um Speiseöle und -fette aufzubereiten und zu reinigen. Da die mit Hilfe von Bleicherden hergestellten Produkte in die Ernährungskette eingehen, müssen diese mit möglichst geringen Verunreinigungen hergestellt werden. Da gebrauchte Bleicherden vielfach in der Futtermittelindustrie verwendet werden, gilt auch für die Bleicherden, die an und für sich keine Schadstoffe an Speiseöle abgeben, möglichst geringe Schadstoffbelastungen zu erzielen.

Eine der am meisten gefürchteten Verunreinigungen in Lebensmitteln sind Dioxine und Dibenzofurane. Einer Empfehlung der FEDIOL (La Fédération de l'Industrie de l'Huilerie de l'UE bzw. EU Seed Crushers and Oils Processors' Federation) gemäß sollen Bleicherden weniger als 1 ng/kg I-TEQ (Toxizitätsequivalente) an Dioxinen/Dibenzofuranen enthalten.

In der WO 88/07891 A wird ein gebrannter mineralischer Stoff auf der Basis von Tonen oder Tonmineralien beschrieben, welcher ein Mineral aus der Gruppe der Smektite sowie eine katalytisch aktive Substanz enthält. Der Stoff wurde bei der Herstellung unterhalb der Sintertemperatur zwischen 650 und 1200 °C gebrannt. Er weist eine offene Porosität von mindestens 20 Vol.-% auf, wobei der mittlere Durchmesser der Poren 5 bis 500 µm beträgt. Der Stoff enthält mindestens ein Spurenelement, wie Kupfer, Nickel, Mangan, Titan, Zink, Chrom oder andere Schwermetalle. Der gebrannte mineralische Stoff eignet sich zur thermischen Entsorgung toxischer Substanzen, wie Dioxinen, bei Temperaturen größer 200 °C.

Die Verunreinigung der Umwelt mit Dioxinen ist ein ubiquitäres Problem. Die größten Dioxinmengen stammen aus anthropogenen Quellen, jedoch finden sich Dioxine zum Teil auch in tieferen tonhaltigen Erdschichten, die eindeutig keinen menschlichen Aktivitäten zugeordnet werden können. Nach neueren Untersuchungen wurden Dioxine während der Ablagerung dieser Erdschichten über biokatalytische Synthesen aus 2,4, 6-Trichlorphenol erzeugt, das seinerseits durch Einwirkung von exogenen bakteriellen Chlorperoxidasen aus dem in organischen Materialien vorhandenen Phenol entstanden sein kann. Diese Thesen werden dadurch gestützt, dass anthropogene Dioxine aufgrund der geringen Beweglichkeit von Dioxinen im Boden nahezu ausschließlich in den oberen Schichten gefunden werden. Weiterhin weist die Verteilung der Kongenären (Isomeren mit unterschiedlicher Stellung der Chloratome) der in

Tonen aus tiefen Schichten enthaltenen Dioxine ein ungewöhnliches Muster auf. Auch das Fehlen von Dibenzofuranen, die typische Begleiter von anthropogenen Dioxinen sind, weist auf eine ungewöhnliche Entstehungsgeschichte hin.

Unabhängig von der Verwendung von Bleicherden und der Quelle der Dioxine bestand die Aufgabe, dioxinarme bzw. weitgehend dioxinfreie Ton- oder Bleicherdeprodukte herzustellen. Insbesondere sollten Bleicherden aus sogenannten naturaktiven Rohtonen bzw. aus dioxinbelasteten Bleicherden hergestellt werden. Ziel der Erfindung war es auch, dass durch den Dioxinentfernungsschritt keine Nachteile im Hinblick auf Reinigungsleistung bzw. Bleichaktivität der entstehenden Produkte hingenommen werden müssen.

Diese Aufgabe wird mit dem Verfahren gemäß Anspruch 1 gelöst. Bevorzugte Ausführungsformen sind in den Unteransprüchen angegeben.

Gegenstand der Erfindung ist somit ein Verfahren zur Verringerung des Dioxingehaltes einer mindestens einen dioxinhaltigen Rohton oder eine dioxinhaltige Bleicherde enthaltenden Zusammensetzung, dadurch gekennzeichnet, dass man die Zusammensetzung auf eine Temperatur im Bereich von 300 bis 650 °C erhitzt.

Die Zusammensetzung besteht zu mindestens 90% aus Rohton und/oder Bleicherde. Nach einer besonders bevorzugten Ausführungsform besteht die Zusammensetzungen im Wesentlichen oder vollständig aus Rohton und/oder Bleicherde.

Unter Rohton wird dabei im Rahmen der vorliegenden Erfindung ein naturaktives oder nicht naturaktives Tonmaterial verstanden, wobei auch durch herkömmliche mechanische oder chemische Aufarbeitungsschritte weiterverarbeitete, jedoch in Abgrenzung zu den Bleicherden nicht in einem (gesonderten) Aktivierungsschritt aktivierte Tonmaterialien erfasst sein sollen. Entsprechend wird unter Bleicherde im Sinne der vorliegenden Erfindung ein (in einem Aktivierungsschritt) aktiviertes, insbesondere durch thermische und/oder Säurebehandlung aktiviertes Tonmaterial verstanden. Der Begriff Bleicherde ist dem Fachmann geläufig und umfasst aktivierte Tonmaterialien, die aufgrund ihrer Adsorptions-bzw. Bleichaktivität zur Reinigung insbesondere von Speiseölen und -fetten verwendet werden können.

Erfindungsgemäß können alle dem Fachmann geläufigen naturaktiven und nicht naturaktiven Rohtone sowie frische oder gebrauchte Bleicherden (d.h. aktivierte Rohtone) eingesetzt werden, insbesondere di- und trioctaedrische Schichtsilikate der Serpentin-, Kaolin- und Talk-Pyrophyllitgruppe, Smektite, Vermiculite, Illite und Chlorite sowie der Sepiolith-Palygorskit-Gruppe, wie z.B. Montmorillonit, Neutronit, Saponit und Vermiculit oder Hectorit, Beidellit, Palygorskit sowie Wechsellagerungsminerale (mixed layer minerals). Natürlich können auch Gemische aus zwei oder mehreren der vorstehenden Materialien eingesetzt werden. Genauso kann die erfindungsgemäß eingesetzte Zusammensetzung mit mindestens einem dioxinhaltigen Rohton und/oder einer dioxinhaltigen Bleicherde auch noch weitere Bestandteile enthalten, die die vorgesehene Verwendung der Zusammensetzung, insbesondere deren Bleichaktivität nicht beeinträchtigen oder sogar nützliche Eigenschaften aufweisen.

Nach einer bevorzugten erfindungsgemäßen Ausführungsform handelt es sich bei der eingesetzten Zusammensetzung um eine dioxinhaltige Bleicherde oder einen dioxinhaltigen Rohton, wobei mit Hilfe des erfindungsgemäßen Verfahrens ein(e) dioxinarme(r) oder weitestgehend dioxinfreie(r) Bleicherde oder Rohton hergestellt werden kann.

Unter "Dioxinen" versteht man chlorierte Dibenzodioxine, aber auch die analogen Dibenzofurane. Im Folgenden wird der Begriff "Dioxin(e)" stellvertretend für diese Substanzklassen verwendet.

Unter Verringerung der Dioxinkonzentration wird erfindungsgemäß jegliche Senkung des Dioxingehaltes der Zusammensetzung nach Durchführung des erfindungsgemäßen Verfahrens im Vergleich zum Ausgangsmaterial verstanden. Vorzugsweise wird der Dioxingehalt der Zusammensetzung dabei von über 1 ng I-TEQ/kg auf unter 1 ng/kg I-TEQ, insbesondere auf unter 0,7 ng I-TEQ/kg verringert.

Es ist allgemein bekannt, dass hohe Temperaturen die Gitterstrukturen einer aktiven Bleicherde zerstören, wodurch die Bleichaktivität abnimmt. Insgesamt handelt es sich bei den erfindungsgemäss eingesetzten Rohtonen und Bleicherden um Materialien, deren Brauchbarkeit z. B. aufgrund einer nachteiligen Veränderung der Gitterstruktur durch hohe Temperaturen beeinträchtigt werden kann. Überraschenderweise konnte nun gezeigt werden, dass bei Temperaturen zwischen 300 und 650 °C, insbesondere zwischen 300 und 600 °C, und besonders bevorzugt von 410 bis 600 °C, in dem eingesetzten Ausgangsmaterial (Rohton oder Bleicherde) enthaltene Dioxine, insbesondere ohne Verlust der Brauchbarkeit des Rohtons bzw. der Bleicherde, abgebaut werden können. Die Dioxingehalte konnten insbesondere bei den höheren Temperaturbereichen teilweise bis an die Nachweisgrenze gesenkt werden. Besonders gute Ergebnisse wurden bei einer Temperatur zwischen 450 und 550 °C (600 °C) erzielt.

Weiterhin wurde überraschend gefunden, dass der Erhitzungsschritt einstufig und ohne Verwendung einer Inertgasatmosphäre (z. B. Stickstoff oder Wasserdampf oder dergleichen) durchgeführt werden kann und mit diesem einfachen Verfahren besonders gute Ergebnisse erzielt werden. Nach einer besonders bevorzugten erfindungsgemäßen Ausführungsform wird der Erhitzungsschritt in sauerstoffhaltiger Atmosphäre, insbesondere Luftatmosphäre, durchgeführt.

Nach einer besonders bevorzugten Ausführungsform wird nach dem Erhitzen eine Rehydratisierung auf einen Feuchtigkeitsgehalt von 3,0 bis 14 Gew.-%, insbesondere von 5,0 bis 11 Gew.-%, besonders bevorzugt von 7,0 bis 10 Gew.-%, durchgeführt, gegebenenfalls verbunden mit einer Säureaktivierung, wodurch überraschend keine Verluste in der Bleichaktivität des Produktes hingenommen werden müssen.

Im Gegenteil wurde unerwartet gefunden, dass bei einer Säureaktivierung des Rohtons bzw. auch der Bleicherde nach dem Erhitzungsschritt sowohl besonders dioxinarme als auch besonders aktive Bleicherden erhalten werden. Weiterhin wurde gefunden, dass es in vielen Fällen vorzuziehen ist, die Säureaktivierung direkt nach dem Erhitzen, d. h. vor einer gegebenenfalls durchgeführten Rehydratisierung vorzusehen.

Die Säurebehandlung kann mit mindestens einer organischen oder anorganischen Säure in gelöster Form oder als Feststoff durchführt werden. Soweit eine Zusammensetzung mit einem naturaktiven Rohton oder einer Bleicherde eingesetzt wird, erfolgt die Säurebehandlung vorzugsweise mit 1 bis 10 Gew.-% Säure. Soweit eine Zusammensetzung mit einem nicht naturaktiven Rohton eingesetzt wird, werden in einigen Fällen vorzugsweise 20 bis 70 Gew.-% Säure, insbesondere anorganischer Säure, verwendet.

Durch eine nach dem Erhitzungsschritt durchgeführte Säurebehandlung (Säureaktivierung) können sogar deutlich verbesserte Bleichaktivitäten bzw. Adsorptions- oder Entfärbungsaktivitäten erhalten werden.

Allgemein kann die erfindungsgemäße Aktivierung der Rohtone durch eine Behandlung mit Säure durchgeführt werden. Dazu werden die Rohtone mit einer anorganischen oder organischen Säure in Kontakt gebracht. Im Prinzip kann dabei jedes dem Fachmann geläufige Verfahren zur Säureaktivierung von Tonen verwendet werden, einschließlich der in der WO 99/02256, der US-5,008,226, und der US-5,869,415 beschriebenen Verfahren.

Nach einer bevorzugten erfindungsgemäßen Ausführungsform ist es nicht erforderlich, dass die überschüssige Säure und die bei der Aktivierung entstehenden Salze ausgewaschen werden. Vielmehr wird nach Aufgabe der Säure, wie bei der Säureaktivierung üblich, kein Waschschritt durchgeführt, sondern der behandelte Rohton getrocknet und dann auf die gewünschte Korngröße vermahlen. Beim Vermahlen wird meist eine typische Bleicherdefeinheit eingestellt. Dabei liegt der Trockensiebrückstand auf einem Sieb mit einer Maschenweite von 63 µm im Bereich von 20 bis 40 Gew.-%. Der Trockensiebrückstand auf einem Sieb mit einer Maschenweite von 25 µm liegt im Bereich von 50 bis 65 Gew.-%.

Bei einer möglichen Ausführungsform des erfindungsgemäßen Verfahrens wird die Aktivierung des Rohtons in wässriger Phase durchgeführt. Dazu wird die Säure als wässrige Lösung mit dem Rohton in Kontakt gebracht. Es kann dabei so vorgegangen werden, dass zunächst der Rohton, welcher vorzugsweise in Form eines Pulvers bereitgestellt wird, in Wasser aufgeschlämmt wird. Anschließend wird die Säure (z.B. in konzentrierter Form) zugegeben. Der Rohton kann jedoch auch direkt in einer wässrigen Lösung der Säure aufgeschlämmt werden, oder die wässrige Lösung der Säure auf den Rohton aufgegeben werden. Nach einer vorteilhaften Ausführungsform kann die wässrige Säurelösung beispielsweise auf einen vorzugsweise gebrochenen oder pulverförmigen (Roh-)ton aufgesprüht werden, wobei die Wassermenge bevorzugt möglichst gering gewählt wird und z.B. eine konzentrierte Säure bzw. Säurelösung eingesetzt wird. Die Säuremenge kann in vielen Fällen, vorzugsweise zwischen 1 und 10 Gew.-%, besonders bevorzugt zwischen 2 und 6 Gew.-% einer starken Säure, insbesondere einer Mineralsäure wie Schwefelsäure, bezogen auf den wasserfreien Rohton (atro), gewählt werden. Es können jedoch auch höhere Säuremengen eingesetzt werden und in einigen Fällen von Vorteil sein. Soweit erforderlich, kann überschüssiges Wasser abgedampft werden und der aktivierte Rohton dann bis zur gewünschten Feinheit gemahlen werden. Vorzugsweise wird auf den gewünschten Feuchtigkeitsgehalts getrocknet. Meist wird der Wassergehalt des erhaltenen Bleicherdeprodukts auf einen Anteil von weniger als 20 Gew.-%, bevorzugt weniger als 10 Gew.-% eingestellt.

Für die oben beschriebene Aktivierung mit einer wässrigen Lösung einer Säure bzw. einer konzentrierten Säure kann die Säure an sich beliebig gewählt werden. Es können sowohl Mineralsäuren, als auch organische Säuren oder Gemische der vorstehenden Säuren verwendet werden. Es können übliche Mineralsäuren verwendet werden, wie Salzsäure, Phosphorsäure oder Schwefelsäure, wobei Schwefelsäure bevorzugt ist. Es können konzentrierte oder verdünnte Säuren bzw. Säurelösungen verwendet werden. Als organische Säuren können z. B Citronensäure oder Oxalsäure verwendet werden. Bevorzugt ist Citronensäure. Vorzugsweise, jedoch nicht zwingend, wird der Rohton vor der Säurebehandlung nicht calciniert.

Die Korngröße bzw. die mittlere Korngröße des erfindungsgemäßen Adsorptionsmittels sollte vorzugsweise so gewählt werden, dass bei einer späteren Verwendung des aktivierten Rohtones bzw. der Bleicherde eine vollständige und einfache Abtrennung des Tons vom raffinierten Produkt ermöglicht wird. Nach einer erfindungsgemäßen Ausführungsform ist die mittlere Korngröße des pulverförmigen Rohtons in einem Bereich von 10 bis 63 µm gewählt. Typischerweise wird die Feinheit so gewählt, dass auf einem Sieb mit einer Maschenweite von 63 µm 20 bis 40 Gew.-% der Mischung zurückbleiben (Siebrückstand) und auf einem Sieb mit einer Maschenweite von 25 µm 50 bis 65 Gew.-% der Mischung zurückbleiben. Dies kann als typische Bleicherdefeinheit bezeichnet werden.

Wie bereits erläutert, können mit dem erfindungsgemäßen Verfahren auf einfache und kostengünstige Weise Adsorptionsmittel und Bleicherdeprodukte zur Verfügung gestellt werden, deren Adsorptions-bzw. Bleichaktivität überraschend hoch ist und in einiger Hinsicht über der Aktivität herkömmlicher hochaktiver Bleicherden liegt.

Eine Calcinierung nach der Säureaktiverung ist nicht erforderlich, jedoch nicht ausgeschlossen.

Die Menge der zur Aktivierung verwendeten Säure wird so gewählt, dass einerseits eine ausreichende Aktivierung (im Hinblick insbesondere auf Adsorptions-, Bleich- und/oder Entfärbeaktivität des Materials, vorzugsweise bei der Behandlung von Speiseölen und -fetten) des (Roh-)tons erreicht wird, andererseits aber auch keine übermäßige Beladung mit Säure erfolgt. Die einzusetzende Menge hängt auch von der Art der verwendeten Säure, beispielsweise ihrer Säurestärke ab. Die geeignete Säuremenge kann vom Fachmann durch einfache Vorversuche ermittelt werden. Beim Vermischen des (Roh-)tons und der Säure ist die Anwesenheit weiterer (Feststoff) -Komponenten in der Regel nicht erforderlich, jedoch erfindungsgemäss nicht ausgeschlossen. Die vorstehend beschriebene Säureaktivierung des Rohtons oder der Bleicherde kann auch vor dem erfindungsgemäßen Erhitzungsschritt durchgeführt werden.

Geeignete anorganische Säuren sind beispielsweise Salzsäure, Schwefelsäure und/oder Phosphorsäure zur Aktivierung des Rohtons oder der Bleicherde, insbesondere bei nicht naturaktiven Rohtonen.

Der eingesetzte dioxinhaltige Rohton bzw. die dioxinhaltige Bleicherde haben vorzugsweise eine spezifische Oberfläche von mehr als 50 m²/g und ein Porenvolumen von mehr als 0,1 ml/g, bestimmt nach den nachstehenden analytischen Methoden.

Nach einem weiten Aspekt der Erfindung wurde festgestellt, dass Dioxine auf getrockneten Rohtonen bzw. Bleicherden mitunter extrem stark fixiert sind, so dass diese nach den derzeit angewendeten Analysenmethoden (Extraktion mit organischen Lösungsmitteln bei 140 C und 80 bar Druck) nicht mehr nachgewiesen werden können, so dass fälschlich angenommen wird, dass die Rohtone keine Dioxine enthalten. Wird das identische Material jedoch auf einen Feuchtigkeitsgehalt von 3,0 bis 14 Gew.-%, insbesondere von 8 bis 10 Gew.-% rehydratisiert, sind die darin enthaltenen Dioxine analytisch wieder nachweisbar.

Mit dem erfindungsgemäßen, einfachen Verfahren können überraschend dioxinarme Bleicherden erhalten werden, welche eine sehr gute Aktivität beispielsweise bei der Bleichung von Ölen und Fetten aufweisen. Neben dem vorstehend beschriebenen Verfahren zur Herstellung eines dioxinarmen Bleicherdeproduktes ist ein weiterer Gegenstand der Erfindung daher ein dioxinarmes Bleicherdeprodukt selbst, welches mit dem oben beschriebenen Verfahren erhältlich ist.

Ein weiterer Gegenstand der Erfindung ist die Verwendung dieses dioxinarmen Bleicherdeproduktes zur Raffination von Ölen und Fetten. Besonders bevorzugt wird das dioxinarme Bleicherdeprodukt für die Raffination von (pflanzlichen) Ölen verwendet. Das dioxinarme Bleicherdeprodukt eignet sich insbesondere zur Entfärbung und für die Entfernung von Chlorophyllen aus Ölen oder Fetten.

Es wurden folgende analytische Methoden angewendet:
Oberfläche: Die spezifische Oberfläche wurde nach der BET-Methode mit einem vollautomatische Stickstoffporosimeter der Firma Micromeritics, Typ ASAP 2010, gemäß DIN 66131 bestimmt.
Porenvolumen: Das Porenvolumen wird nach der CCl₄-Methode bestimmt (H. A. Benesi, R. V. Bonnar, C. F. Lee, Anal. Chem. 27 (1955), Seite 1963). Zur Ermittlung der Porenvolumina für verschiedene Porendurchmesserbereiche werden definierte partielle CCl₄-Dampfdrucke durch Mischen von CCl₄ mit Paraffin eingestellt.
Ölanalytik: Die Farbzahlen in Ölen (Lovibond-Methode) wurden gemäß AOCS Cc 13b-45 bestimmt. Die Chlorophyll-A-Bestimmung erfolgte nach AOCS Cc 13d-55.
Wassergehalt: Der Wassergehalt der Produkte bei 105°C wird unter Anwendung der Methode DIN/ISO-787/2 durch 2-stündiges Trocknen im Trockenschrank ermittelt.
Dioxin-Analytik: Die Bestimmung der Dioxine/Dibenzofurane wurde von einem approbierten Laboratorium durchgeführt. Die Auswertung erfolgte nach der WHO-Methode (vgl. Amtsblatt der Europäischen Gemeinschaften, 45. Jahrgang, 6. August 2002, L209/5 - L209/14). Die Analyse hinsichtlich der Dioxine wird wie folgt durchgeführt:

Die Proben werden auf einen Feuchtigkeitsgehalt von 8,5 Gew.-% eingestellt. Soweit sich für bestimmte Proben ein so hoher Feuchtigkeitsgehalt nicht einstellen lässt, wird in der Klimakammer der höchstmögliche Feuchtigkeitsgehalt eingestellt.

Etwa 30 bis 50 g Probe werden dann nach Zugabe des internen Standardgemisches mit Toluol als Lösungsmittels mittels ASE (Accelerated Soxhlet Extraction) bei 140°C und 80 bar über einen Behandlungszeitraum von 25 min. extrahiert. Der Extrakt wird an einer gemischten Kieselgelsäule (22% NaOH-Silica, neutrales Silica, 44% H₂SO₄-Silica) aufgereinigt, gefolgt von einer chromatographischen Auftrennung an Aluminiumoxid.

Nach Zugabe des nachstehenden Wiederfindungsstandards wird das Eluat aus der Aluminiumoxidsäule im Stickstoffstrom auf das geeignete Endvolumen eingeengt und anschließend mittels hochauflösender Gaschromatographie (Injektion mittels Kaltverdampfung, Säule: DB-Dioxin) und hochauflösender Massenspektroskopie (Elektronenstossionisation, 2 Ionen pro Chlorierungsgrad (nativ und interner Standard)) auf die 17 Dioxintypen (PCDD/PCDF) vermessen. Die Quantifizierung erfolgte mittels der Isotopenverdünnungsmethode.

Es wurden folgende interne markierte ¹³C12-Standards verwendet:
2378-TCDD
12378-PeCDD
123678-HxCDD
1234678-HpCDD
OCDD
2378-TCDF
23478-PeCDF
123678-HxCDF
123789-HxCDF
1234678-HpCDF
OCDF

Es wurde folgender Wiederfindungsstandard verwendet:
³⁷C14-2378-TCDD
¹³C12-1234789-HpCDF

In den folgenden Beispielen und Vergleichsbeispielen, die nur zur Erläuterung angegeben sind, wurden folgende Tonqualitäten verwendet:

### Ton 1:

Natürliche vorkommende Tonmischung aus Attapulgit und Montmorillonit aus dem Gebiet Georgia/USA:

| | |
|---|---|
| Porenvolumen: | 0,24 ml/g |
| Spezifische Oberfläche: | 154 m²/g |
| Dioxingehalt: | 6,6 ng I-TEQ/kg |

### Ton 2:

| | |
|---|---|
| Mexikanischer Hormit: | |
| Porenvolumen: | 0,26 ml/g |
| Spezifische Oberfläche: | 176 m²/g |
| Dioxingehalt: | 5,4 ng I-TEQ/kg |

### Ton 3:

Mit HCl aktivierter Montmorillonit (Bleicherde):

| | |
|---|---|
| Porenvolumen: | 0,35 ml/g |
| Spezifische Oberfläche: | 244 m²/g |
| Dioxingehalt: | 9,4 ng I-TEQ/kg |

### Ton 4:

| | |
|---|---|
| Türkischer Montmorillonit: | |
| Porenvolumen: | 0,15 ml/g |
| Spezifische Oberfläche: | 115 m²/g |
| Dioxingehalt: | 6,5 ng I-TEQ/kg. |

### Vergleichsbeispiel

### Herstellung einer Bleicherde aus Ton 1

Ein grubenfeuchter Rohton 1 wurde auf einen Feuchtigkeitsgehalt von 15 - 20 Gew.-% vorgetrocknet, über eine Rotorschlagmühle vermahlen und anschließend auf einen Endfeuchtigkeitsgehalt von 8 Gew.-% gebracht. 100 g des erhaltenen Pulvers wurden mit 309 g Wasser und 2,88 g H₂SO₄ (96%ig) in einem Becherglas innig vermengt. Das erhaltene Gemisch wurde bei 110°C auf einen Wassergehalt von 9 Gew.-% getrocknet und anschließend auf eine typische Bleicherdefeinheit (Trockensiebrückstand (TSR) > 63µ = 29%) vermahlen.

Der Dioxingehalt der so erhaltenen Bleicherde wurde zu 6,4 ng I-TEQ/kg bestimmt.

### Beispiel 1

### Dioxinentfernung aus Attapulgit/Montmorillonit (Ton 1)

Der grubenfeuchte Rohton 1 wurde auf 15 - 20 Gew.-% Wasser vorgetrocknet und anschließend über eine Rotorschlagmühle vermahlen. Das dabei entstandene Pulver wurde auf gleiche Teile aufgeteilt, die jeweils eine Stunde bei Temperaturen von 150, 300, 400, 450, 500 und 600°C behandelt wurden. Die nach der Temperaturbehandlung wasserfrei vorliegenden Materialien wurden in einem Klimaschrank bei 30° C und 80% Luftfeuchte auf Wassergehalte von 8 bis 9% rehydratisiert. Die Probe, die bei 600°C erhitzt wurde, erreichte bei der Rehydratisierung nur einen Wassergehalt von 7,7 Gew.-%.

Die nachstehende Tabelle I gibt die gemessenen Dioxingehalte der behandelten Proben nach der WHO-Methode an.

**Tabelle I**

| Dioxinentfernung aus Ton 1 | | | |
|---|---|---|---|
| T (°C) | Dioxingehalt (calciniert) (ng I-TEQ/kg) | H₂O-Gehalt nach Rehydratisierung (%) | Dioxingehalt (rehydratisiert) (ng I-TEQ/kg) |
| 125 | 0,17 | 9,0 | 6,6 |
| 200 | 0,12 | 9,1 | 5,5 |
| 300 | 0,09 | 8,4 | 2,1 |
| 400 | 0,08 | 8,3 | 1,7 |
| 450 | 0,07 | 8,4 | 1,0 |
| 500 | 0,07 | 8,3 | 0,23 |
| 600 | 0,07 | 7,7 | 0,11 |

Die Tabelle I zeigt, dass ab einer Temperatur von 200°C ein geringer und ab einer Temperatur von 300°C ein deutlicher Abbau von Dioxinen erfolgt, wobei bei 450°C der von der FEDIOL diskutierte Grenzwert von 1 ng I-TEQ/kg erreicht wird. Es sei hier aber noch einmal darauf hingewiesen, dass diese Werte erst nach der Rehydratisierung messbar werden (rechte Spalte von Tabelle I). Beim trockenen (calcinierten), nicht rehydratisierten Material (linke Spalte) findet man dagegen analytisch stets deutlich zu geringe Werte.

### Beispiel 2

### Dioxinentfernung aus Hormit (Ton 2)

Das Ausgangsmaterial (mexikanischer Hormit) wurde analog zu Beispiel 1 verarbeitet. Die hierbei erhalten Daten sind in der Tabelle II zusammengefasst.

**Tabelle II**

| Dioxinentfernung aus Ton 2 | | | |
|---|---|---|---|
| T (°C) | Dioxingehalt (calciniert) (ng I-TEQ/kg) | H₂O-Gehalt nach Rehydratisierung (%) | Dioxingehalt (rehydratisiert) (ng I-TEQ/kg) |
| 125 | 0,18 | 8,6 | 5,4 |
| 200 | 0,13 | 8,7 | 3,9 |
| 300 | 0,09 | 8,2 | 1,3 |
| 400 | 0,08 | 8,1 | 0,93 |
| 500 | 0,08 | 8,3 | 0,21 |
| 600 | 0,07 | 7,5 | 0,10 |

Die Tabelle II zeigt, dass ab einer Temperatur von 300°C ein deutlicher Abbau von Dioxinen und Furanen erfolgt, wobei bei 400°C 1 ng I-TEQ/kg unterschritten wird.

### Beispiel 3

### Dioxinentfernung aus einer Bleicherde (Ton 3)

Das Ausgangsmaterial, ein im Slurryprozess salzsauer aktivierter Montmorillonit, wurde analog zu Beispiel 1 bei Temperaturen von 125°C und 500°C behandelt und analysiert. Die hierbei erhaltenen Daten sind in Tabelle III zusammengefasst.

**Tabelle III**

| Dioxinentfernung aus Ton 3 | | | |
|---|---|---|---|
| T (°C) | Dioxingehalt (calciniert) (ng I-TEQ/kg) | H₂O-Gehalt nach Rehydratisierung (%) | Dioxingehalt (rehydratisiert) (ng I-TEQ/kg) |
| 125 | 0,23 | 10,6 | 9,4 |
| 500 | 0,09 | 7,9 | 0,29 |

### Beispiel 4

### Dioxinentfernung aus Montmorillonit (Ton 4)

Das Ausgangsmaterial (Montmorillonit) wurde analog zu Beispiel 1 bei Temperaturen von 125°C und 500°C verarbeitet. Die hierbei erhaltenen Daten sind in der Tabelle IV zusammengefasst.

**Tabelle IV**

| Dioxinentfernung aus Ton 4 | | | |
|---|---|---|---|
| T (°C) | Dioxingehalt (calciniert) (ng I-TEQ/kg) | H₂O-Gehalt.nach Rehydratisierung (%) | Dioxingehalt (rehydratisiert) (ng I-TEQ/kg) |
| 125 | 0,16 | 11,2 | 6,5 |
| 500 | 0,07 | 8,0 | 0,19 |

### Beispiel 5

### Herstellung einer Bleicherde durch Aktivierung einer Attapulgit/Montmorillonit-Mischung mit Schwefelsäure

Das bei 500°C calcinierte Produkt von Beispiel 1 wurde mit Wasser vermischt und anschließend mit 4 % H₂SO₄ aktiviert. Hierzu wurden 100 g des calcinierten Pulvers mit 250 g Wasser und 4,17 g H₂SO₄ (96 %ig) in einem Becherglas innig vermengt. Das entstehende Gemisch wurde bei 110°C auf einen Wassergehalt von 9 Gew.-% getrocknet und anschließend auf Bleicherdefeinheit vermahlen. (Trockensiebrückstand auf 63 µm-Sieb 20 bis 40 Gew.-%; Trockensiebrückstand auf 25 µm-Sieb 50 bis 65 Gew.-%).

### Beispiel 6

### Herstellung von Bleicherden durch Säureaktivierung von Montmorillonit (Ton 4)

Das Produkt von Beispiel 4 wurde mit Wasser und Salzsäure vermischt. Hierzu wurden 100 g des bei 500°C calcinierten Pulvers mit 300 g Wasser und 112,5 g HCl (32 %ig) in einem Rundkolben überführt und 6 Stunden unter Rückfluss aktiviert. Die Suspension wurde filtriert, der Filterkuchen wurde auf < 0,1% Chloridgehalt ausgewaschen, auf einen Wassergehalt von 9,5% getrocknet und anschließend auf Bleicherdefeinheit vermahlen.

### Anwendungsbeispiel

### Bleichung von Rapsöl

Ein entschleimtes und entsäuertes Rapsöl wurde mit 0,73 Gew.-% Bleicherde bei 110° C 30 min unter einem Druck von 30 mbar gebleicht. Anschließend wurde die Bleicherde abfiltriert, und die Farbzahlen des Öls mit Hilfe der Lovibondmethode in einer 5 ¼" Kuvette bestimmt. Die Tabelle V gibt die Ergebnisse der Bleichung wieder:

**Tabelle V**

| Bleichung von Rapsöl | | |
|---|---|---|
| | Lovibond-Farbzahl rot | Chlorophyll A ppm |
| Rohöl, ungebleicht | > 20 (1 "-Kuvette): 4,7 | 3,26 |
| Bsp. 3 (500°C, rehydratisiert) | 2,2 | 0,12 |
| Bsp. 5 (H₂SO₄) | 3,1 | 0,20 |
| | | |
| | | |
| Bsp. 6 (HCl) | 1,9 | 0,09 |
| Vergleichsbeispiel | 3,4 | 0,22 |
| Tonsil Optimum^{®} 210 FF | 2,1 | 0,11 |

Wie Tabelle V deutlich zeigt, wird mit den erfindungsgemäßen Produkten nach Beispiel 5 und 6 eine bessere Entfärbung (Farbzahl rot und Chlorophyll A) als mit dem Produkt nach dem Vergleichsbeispiel erreicht.

Bei der Produktklasse der säureaktivierten Smektite (Beispiel 3, 6 und Tonsil Optimum^{®} 210 FF, eine hochaktive Bleicherde, Handelsprodukt der Süd-Chemie AG) können mit dem erfindungsgemäßen Verfahren Bleichergebnisse erzielt werden, die dem Stand der Technik zumindest entsprechen.

## Patentansprüche

1. Verfahren zur Verringerung des Dioxingehaltes einer mindestens einen dioxinhaltigen Rohton oder eine dioxinhaltige Bleicherde enthaltenden Zusammensetzung, wobei die Zusammensetzung zu mindestens 90 % aus Rohton und/oder Bleicherde besteht **dadurch gekennzeichnet, dass** man die Zusammensetzung auf eine Temperatur im Bereich von 300 bis 650 °C erhitzt.

2. Verfahren nach Anspruch 1, **dadurch gekennzeichnet, dass** es sich bei der Zusammensetzung um eine dioxinhaltige Bleicherde oder einen dioxinhaltigen Rohton handelt.

3. Verfahren nach einem der vorstehenden Ansprüche, **dadurch gekennzeichnet, dass** man die Zusammensetzung auf eine Temperatur im Bereich von 300 bis 600 °C, insbesondere von 400 bis 600 °C erhitzt.

4. Verfahren nach einem der vorstehenden Ansprüche zur Herstellung einer dioxinarmen, mindestens einen dioxinhaltigen Rohton oder eine dioxinhaltige Bleicherde enthaltenden Zusammensetzung.

5. Verfahren nach einem der vorstehenden Ansprüche, **dadurch gekennzeichnet, dass** nach dem Erhitzen bis auf einen Feuchtigkeitsgehalt von 3,0 bis 14 Gew.-%, insbesondere von 5,0 bis 11 Gew.-%, besonders bevorzugt von 7,0 bis 10 Gew.-%, rehydratisiert wird.

6. Verfahren nach einem der vorstehenden Ansprüche, **dadurch gekennzeichnet, dass** man die Zusammensetzung nach dem Erhitzen, und vorzugsweise vor einer gegebenenfalls durchgeführten Rehydratisierung, einer Säurebehandlung unterzieht.

7. Verfahren nach einem der vorstehenden Ansprüche, **dadurch gekennzeichnet, dass** man die Säurebehandlung mit mindestens einer anorganischen oder organischen Säure durchführt.

8. Verfahren nach einem der vorstehenden Ansprüche, **dadurch gekennzeichnet, dass** die Säurebehandlung bei einem naturaktiven Rohton oder einer Bleicherde mit 1 bis 10 Gew.-% Säure, und bei einem nicht-naturaktiven Rohton mit 20 bis 70 Gew.-% Säure, insbesondere anorganischer Säure, erfolgt.

9. Verfahren nach einem der vorstehenden Ansprüche, **dadurch gekennzeichnet, dass** der eingesetzte dioxinhaltige Rohton oder die dioxinhaltige Bleicherde eine spezifische Oberfläche von mehr als 50 m²/g und ein Porenvolumen von mehr als 0,1 ml/g aufweist.

10. Verfahren nach einem der vorstehenden Ansprüche, **dadurch gekennzeichnet, dass** die zur Säurebehandlung verwendete anorganische Säure ausgewählt ist aus Salzsäure, Schwefelsäure und/oder Phosphorsäure, und die zur Säurebehandlung verwendete organische Säure ausgewählt ist aus Citronensäure und/oder Oxalsäure.

11. Verfahren nach einem der vorstehenden Ansprüche, **dadurch gekennzeichnet, dass** man bei der Säurebehandlung die Zusammensetzung nach deren Erhitzen, insbesondere unmittelbar nach dem Erhitzen, direkt mit der Säure kontaktiert.

12. Verfahren nach einem der vorstehenden Ansprüche, **dadurch gekennzeichnet, dass** man bei der Säurebehandlung die Zusammensetzung nach deren Erhitzen, insbesondere unmittelbar nach dem Erhitzen, als Suspension (slurry) mit der Säure kontaktiert.

## Claims

1. A method for reducing the dioxin content of a composition containing at least one dioxin-containing crude clay or a dioxin-containing bleaching earth, wherein the composition consists to at least 90% of crude clay and/or bleaching earth, **characterized in that** the composition is heated to a temperature in the range of 300-650°C.

2. The method according to claim 1, **characterized in that** the composition is a dioxin-containing bleaching earth or a dioxin-containing crude clay.

3. The method according to any one of the proceeding claims, **characterized in that** the composition is heated to a temperature in the range of 300-650°C, in particular 400-600°C.

4. The method according to any one of the proceeding claims for producing a composition having a low dioxin content, containing at least one dioxin-containing crude clay or a dioxin-containing bleaching earth.

5. The method according to any one of the proceeding claims, **characterized in that** after heating, it is rehydrated to a moisture content of 3.0 to 14 wt%, in particular 5.0 to 11 wt%, especially preferably from the 7.0 to 10 wt%.

6. The method according to any one of the proceeding claims, **characterized in that** the composition is subjected to an acid treatment after heating and preferably before a rehydrating that is optionally performed.

7. The method according to any one of the proceeding claims, **characterized in that** the acid treatment is performed with at least one organic or inorganic acid.

8. The method according to any one of the proceeding claims, **characterized in that** the acid treatment is performed with a naturally active crude clay or a bleaching earth containing 1 to 10 wt% acid and with a crude clay that is not naturally active and contains 20 to 70 wt% acid, in particular inorganic acid.

9. The method according to any one of the proceeding claims, **characterized in that** the dioxin-containing clay or the dioxin-containing bleaching earth used has a specific surface area of more than 50 m²/g and a pore volume of more than 0.1 mL/g.

10. The method according to any one of the proceeding claims, **characterized in that** the inorganic acid used for the acid treatment is selected from hydrochloric acid, sulfuric acid and/or phosphoric acid, and the organic acid used for the acid treatment is selected from citric acid and/or oxalic acid.

11. The method according to any one of the proceeding claims, **characterized in that** in the acid treatment, the composition is contacted directly with the acid after being heated, in particular immediately after being heated.

12. The method according to any one of the proceeding claims, **characterized in that** in the acid treatment, the composition is contacted with the acid after being heated, in particular immediately after being heated, as a suspension (slurry).

## Revendications

1. Procédé pour la réduction de la teneur en dioxine d'une composition contenant au moins une argile brute contenant de la dioxine ou une argile absorbante contenant de la dioxine, dans lequel la composition consiste à au moins 90% d'une argile brute et/ou d'une argile absorbante, **caractérisé en ce que** l'on chauffe la composition à une température dans la plage de 300 à 650°C.

2. Procédé selon la revendication 1, **caractérisé en ce qu'**il s'agit pour la composition d'une argile absorbante contenant de la dioxine ou d'une argile brute contenant de la dioxine.

3. Procédé selon l'une quelconque des revendications précédentes, **caractérisé en ce que** l'on chauffe la composition à une température dans la plage de 300 à 600°C, notamment de 400 à 600°C.

4. Procédé selon l'une quelconque des revendications précédentes pour la fabrication d'une composition pauvre en dioxine, contenant au moins une argile brute contenant de la dioxine ou une argile absorbante contenant de la dioxine.

5. Procédé selon l'une quelconque des revendications précédentes, **caractérisé en ce qu'**après le chauffage, on procède à une réhydratation jusqu'à une teneur en humidité de 3,0 à 14 % en poids, notamment de 5,0 à 11 % en poids, de manière particulièrement préférée de 7,0 à 10 % en poids.

6. Procédé selon l'une quelconque des revendications précédentes, **caractérisé en ce que** l'on soumet la composition à un traitement acide après le chauffage et de préférence avant une réhydratation éventuellement effectuée.

7. Procédé selon l'une quelconque des revendications précédentes, **caractérisé en ce que** l'on effectue le traitement acide avec au moins un acide inorganique ou organique.

8. Procédé selon l'une quelconque des revendications précédentes, **caractérisé en ce que** le traitement acide s'effectue dans le cas d'une argile brute naturellement active ou d'une argile absorbante avec 1 à 10 % en poids d'acide, et dans le cas d'une argile brute non naturellement active avec 20 à 70 % en poids d'acide, notamment d'acide inorganique.

9. Procédé selon l'une quelconque des revendications précédentes, **caractérisé en ce que** l'argile brute utilisée contenant de la dioxine ou l'argile absorbante contenant de la dioxine présente une surface spécifique de plus de 50 m²/g et un volume de pores de plus de 0,1 ml/g.

10. Procédé selon l'une quelconque des revendications précédentes, **caractérisé en ce que** l'acide inorganique utilisé pour le traitement acide est sélectionné parmi l'acide chlorhydrique, l'acide sulfurique et/ou l'acide phosphorique, et l'acide organique utilisé pour le traitement acide est sélectionné parmi l'acide citrique et/ou l'acide oxalique.

11. Procédé selon l'une quelconque des revendications précédentes, **caractérisé en ce que** l'on met directement en contact la composition avec l'acide après son chauffage, notamment directement après le chauffage, lors du traitement acide.

12. Procédé selon l'une quelconque des revendications précédentes, **caractérisé en ce que** l'on met en contact la composition avec l'acide en tant que suspension (bouillie) après son chauffage, notamment directement après le chauffage, lors du traitement acide.
